# EUROPEAN PATENT APPLICATION

(11) **EP 4 597 721 A1**
(43) Date of publication of application: **06.08.2025**
(21) Application number: 23927921.9
(22) Date of filing: 17.03.2023
(51) Int. Cl.: H01M 50/40, H01M 50/449, H01M 50/451

(54) **SEPARATOR, SECONDARY BATTERY, AND ELECTRICAL APPARATUS**

(71) Applicant: Contemporary Amperex Technology (Hong Kong) Limited, Central (HK)
(72) Inventor: MU, Xueying, Ningde, Fujian 352100 (CN); YANG, Jianrui, Ningde, Fujian 352100 (CN); OUYANG, Chuying, Ningde, Fujian 352100 (CN); SUN, Chengdong, Ningde, Fujian 352100 (CN); HUANG, Siying, Ningde, Fujian 352100 (CN); HAN, Chongwang, Ningde, Fujian 352100 (CN); LI, Quan, Ningde, Fujian 352100 (CN)
(74) Representative: Ran, Handong
(86) International application number: PCT/CN2023/082349
(87) International publication number: WO 2024/192603

(57) **Abstract**

The present application provides a separator, comprising a first base film and a second base film. The melting point of the second base film is lower than that of the first base film. The porosity of the first base film is denoted as P1, and the porosity of the second base film is denoted as P2, wherein 1.02 < P1/P2 ≤ 3. A base film with a large porosity has good air permeability, so the first base film with a large porosity exerts the excellent air permeability thereof; and a base film with a small porosity has good strength, so the second base film with a small porosity exerts the good strength thereof and is thus not prone to being punctured by lithium dendrites. Therefore, according to the present application, the separator has good air permeability and good strength due to the combination of the first base film and the second base film, so that the reliability and the cycle performance of a secondary battery can be improved.

## Description

### TECHNICAL FIELD

The present application belongs to the technical field of secondary batteries, and specifically relates to a separator, a secondary battery, and an electrical apparatus.

### BACKGROUND

Secondary batteries are widely used in various consumer electronics and electric vehicles due to their outstanding characteristics of light weight, no pollution, and no memory effect.

With the continuous development of the new energy industry, users have put forward higher requirements on secondary batteries. For example, in some secondary batteries, ion transport is limited, resulting in poor cycling performance of the batteries.

Therefore, how to improve the cycling performance of secondary batteries is a problem that needs to be solved urgently at present.

### SUMMARY OF THE INVENTION

In view of the technical problems in the background, the present application provides a separator, a secondary battery, and an electrical apparatus, aiming at improving the cycling performance of the secondary battery.

In order to achieve the above purposes, according to a first aspect, the present application provides a separator, including a first base film and a second base film, where the melting point of the second base film is lower than the melting point of the first base film; the porosity of the first base film is denoted as P1, the porosity of the second base film is denoted as P2, and 1.02≤P1/P2≤3.

Compared with the existing technologies, the present application at least has the following beneficial effects: when the melting point of the second base film is lower than the melting point of the first base film and 1.02 ≤ P1/P2 ≤ 3, the air permeability and strength of the first base film and the second base film can be better balanced. The base film with high porosity has good air permeability, so the first base film with high porosity exhibits excellent air permeability. The base film with low porosity has good strength, so the second base film with low porosity exhibits good strength and is not easily punctured by dendrites. Therefore, through the cooperation of the first base film and the second base film provided in the present application and making 1.02≤P1/P2≤3, the separator has good air permeability and strength, thus improving the reliability and cycling performance of the secondary battery.

In any embodiment of the present application, 1.05≤P1/P2≤2.5. When 1.05≤P1/P2≤2.5, the air permeability and strength of the first base film and the second base film can be better balanced. In this way, the separator has good air permeability and strength, thus improving the reliability and cycling performance of the secondary battery.

In any embodiment of the present application, the porosity of the first base film is 30%-90%, optionally 35%-85%; and/or the porosity of the second base film is 30%-70%, optionally 35%-45%.

When the porosity of the first base film is 30%-90%, and/or the porosity of the second base film is 30%-70%, the air permeability and strength of the first base film and the second base film can be better balanced. In this way, the separator has good air permeability and strength, thus improving the reliability and cycling performance of the secondary battery. When the porosity of the first base film is 35%-85% and/or the porosity of the second base film is 35%-45%, the air permeability and strength of the separator can be further improved, thus improving the reliability and cycling performance of the secondary battery.

In any embodiment of the present application, the ratio of the average pore size of the first base film to the average pore size of the second base film is 0.05-80, optionally 0.2-40. The smaller the average pore size, the smaller the space occupied by the average pore area, the larger the space occupied by the fiber filaments of the base film, and the stronger the strength of the base film; on the contrary, the smaller the space occupied by the fiber filaments of the base film, the larger the average pore area of the separator, and the better the air permeability. By setting the ratio of the average pore diameters within the above range, the separator simultaneously has high air permeability and strength, thereby improving the reliability and cycling performance of the separator.

In any embodiment of the present application, the average pore size of the first base film is larger than the average pore size of the second base film. The requirements on the porosities of the two base films can be better met, so that the separator has good air permeability and strength, thus improving the reliability and cycling performance of the secondary battery.

In any embodiment of the present application, the average pore size of the first base film is 100nm-4000nm, optionally 100nm-2000nm; the average pore size of the second base film is 50nm-2000nm, optionally 50nm-500nm. The requirements on the porosities of the two base films can be better met, so that the separator has good air permeability and strength, thus improving the reliability and cycling performance of the secondary battery.

In any embodiment of the present application, the transverse tensile strength of the first base film is less than the longitudinal tensile strength of the first base film; the ratio of the transverse tensile strength of the first base film to the longitudinal tensile strength of the first base film is 0.2-0.8, optionally 0.3-0.6. In this way, the separator has good air permeability and strength, thus improving the reliability and cycling performance of the secondary battery.

In any embodiment of the present application, the transverse tensile strength of the second base film is less than the longitudinal tensile strength of the second base film; optionally, the ratio of the transverse tensile strength of the second base film to the longitudinal tensile strength of the second base film is 0.45-0.9, optionally 0.6-0.8. In this way, the separator has good air permeability and strength, thus improving the reliability and cycling performance of the secondary battery.

In any embodiment of the present application, the transverse tensile strength of the first base film is less than the transverse tensile strength of the second base film; and/or, the longitudinal tensile strength of the first base film is less than the longitudinal tensile strength of the second base film. In this way, the separator has good air permeability and strength, thus improving the reliability and cycling performance of the secondary battery.

In any embodiment of the present application, the separator satisfies at least one of (1)-(4):
(1) the transverse tensile strength of the first base film is 150-900Kgf/cm², optionally 200-750Kgf/cm²;
(2) the longitudinal tensile strength of the first base film is 800-2500Kgf/cm², optionally 1100-1900Kgf/cm²;
(3) the transverse tensile strength of the first base film is 1500-3600Kgf/cm², optionally 1800-3300Kgf/cm²;
(4) the longitudinal tensile strength of the second base film is 1900-4000Kgf/cm², optionally 2000-3500Kgf/cm².

When the separator satisfies at least one of (1)-(4) described above, the separator has good air permeability and strength, thus improving the reliability and cycling performance of the secondary battery.

In any embodiment of the present application, the ratio of the thickness of the first base film to the thickness of the second base film is greater than or equal to 1.02, optionally 1.2-3.0. In this way, the separator has good air permeability and strength, thus improving the reliability and cycling performance of the secondary battery.

In any embodiment of the present application, the thickness of the first base film is 2µm-12µm, optionally 3µm-6µm; and/or the thickness of the second base film is 2µm-12µm, optionally 3µm-5µm. In this way, the separator has good air permeability and strength, thus improving the reliability and cycling performance of the secondary battery.

In any embodiment of the present application, the ratio of the melting point of the first base film to the melting point of the second base film is greater than or equal to 1.05 and less than or equal to 3.0, optionally greater than or equal to 1.1 and less than or equal to 2.5. In this way, the separator has good air permeability and strength and simultaneously has good heat resistance, thus improving the reliability and cycling performance of the secondary battery.

In any embodiment of the present application, the melting point of the first base film is 160°C-360°C, optionally 180°C-350°C; and/or the melting point of the second base film is 120°C-280°C, optionally 130°C-265°C. In this way, the separator has good air permeability and strength and simultaneously has good heat resistance, thus improving the reliability and cycling performance of the secondary battery.

In any embodiment of the present application, each of the first base film and the second base film is at least one independently selected from the group consisting of polyolefins and derivatives thereof, halogenated polyolefins and derivatives thereof, polyethers and derivatives thereof, polyetheretherketones and derivatives thereof, polyesters and derivatives thereof, polyimides and derivatives thereof, polyvinyl alcohol and derivatives thereof, polytetrafluoroethylene and derivatives thereof, polyvinyl fluoride and derivatives thereof, polyvinylidene fluoride and derivatives thereof, and polyethylene terephthalate and derivatives thereof. When the first base film and the second base film are respectively at least one of the materials described above, the porosity of the separator can be controlled within an appropriate range, thus improving the air permeability and strength of the separator during compounding, and thus improving the reliability and cycling performance of the secondary battery.

In any embodiment of the present application, a bonding layer is further provided between the first base film and the second base film, and the bonding layer includes a binder; optionally, the bonding layer includes a binder and a filler. When the bonding layer is provided between the first base film and the second base film, and the bonding layer includes the binder and the filler, the separator simultaneously has high strength, heat resistance, and air permeability. The reliability and cycling performance of the secondary battery can be improved.

In any embodiment of the present application, the binder includes one or more of polyacrylate, polyacrylic acid, polytetrafluoroethylene, polyvinylidene fluoride, vinylidene fluoride-trichloroethylene copolymer, polyvinyl pyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl pullulan. When the bonding layer is provided between the first base film and the second base film, and the bonding layer includes the above components, the separator simultaneously has high strength, heat resistance, and air permeability. The reliability and cycling performance of the secondary battery can be improved.

In any embodiment of the present application, the filler includes at least one of inorganic particles, organic particles, and organic-metal framework materials. When the bonding layer is provided between the first base film and the second base film, and the filler in the bonding layer includes at least one of the inorganic particles, organic particles, and organic-metal framework materials described above, the filler in the bonding layer can further improve the heat resistance and strength of the separator, thus improving the reliability of the secondary battery.

In any embodiment of the present application, the thickness of the bonding layer is greater than or equal to 0.3 µm, optionally 0.5-2 µm. When the thickness of the bonding layer is within the given range, the separator has good air permeability and strength, thus improving the reliability and cycling performance of the secondary battery.

In any embodiment of the present application, the air permeability of the separator is 200s/100cc-400s/100cc, optionally 250s/100cc-320s/100cc; and/or the porosity of the separator is 25%-80%, optionally 35%-55%. When at least one of the properties of the separator is within the given range, the separator has good air permeability and strength, thus improving the reliability and cycling performance of the secondary battery.

According to a second aspect, the present application provides a method for preparing a separator, including: providing a first base film and a second base film, where the melting point of the second base film is lower than the melting point of the first base film, and the ratio of the porosity of the first base film to the porosity of the second base film satisfies 1.02≤P1/P2≤3; and compounding the first base film and the second base film to obtain the separator. In this way, the separator has good air permeability and strength, thus improving the reliability and cycling performance of the secondary battery.

In any embodiment of the present application, the method further includes providing a bonding layer slurry, where the bonding layer slurry includes a binder; and arranging the bonding layer slurry on the first base film and/or the second base film to form a bonding layer, where the bonding layer is located between the first base film and the second base film after compounding.

The bonding layer slurry further includes a filler; optionally, the filler includes at least one of inorganic particles, organic particles, and organic-metal framework materials. In this way, the separator has good air permeability and strength, thus improving the reliability and cycling performance of the secondary battery.

According to a third aspect, the present application provides a secondary battery, including the separator according to the first aspect of the present application, or the separator prepared by adopting the method for preparing a separator according to the second aspect of the present application. When the secondary battery adopts the given separator, the reliability and cycling performance of the secondary battery can be improved.

In any embodiment of the present application, the secondary battery further includes a positive electrode plate and a negative electrode plate, and the second base film faces towards the negative electrode plate. The second base film has low porosity and high strength, thus improving the resistance to dendrite piercing. At the same time, the first base film has good heat resistance and faces towards the positive electrode, thus improving the thermal shock resistance of the separator.

According to a fourth aspect, the present application provides an electrical apparatus, including the secondary battery according to the third aspect of the present application. When the secondary battery of the electrical apparatus adopts the given separator, the reliability of the electrical apparatus can be improved.

Since the electrical apparatus in the present application includes the battery module provided in the present application, it at least has the same advantages as the secondary battery.

### BRIEF DESCRIPTION OF DRAWINGS

In order to more clearly describe the technical solutions of the present application, the drawings used in the present application will be briefly described below. Clearly, the drawings described below are merely some embodiments of the present application. For those of ordinary skills in the art, other drawings may also be obtained based on these drawings without contributing any inventive labor.
FIG. 1 is a schematic structural diagram of a separator according to an embodiment of the present application.
FIG. 2 is a schematic structural diagram of a separator according to an embodiment of the present application.
FIG. 3 is a schematic view of a secondary battery according to an embodiment.
FIG. 4 is an exploded view of FIG. 3.
FIG. 5 is a schematic view of a battery module according to an embodiment.
FIG. 6 is a schematic view of a battery pack according to an embodiment.
FIG. 7 is an exploded view of FIG. 6.
FIG. 8 is a schematic view of an apparatus in which a secondary battery is used as a power source.

### DETAILED DESCRIPTION

The present application will be further described below in combination with the embodiments. It is to be understood that these embodiments are only intended to describe the present application, instead of limiting the scope of the present application.

For the sake of brevity, the present application only specifically discloses some numerical ranges. However, any lower limit may be combined with any upper limit to form an unspecified range; and any lower limit may be combined with another lower limit to form an unspecified range, and likewise, any upper limit may be combined with any another upper limit to form an unspecified range. Further, each individually disclosed point or single value itself may serve as a lower limit or upper limit in combination with any other point or single value or with other lower limits or upper limits to form an unspecified range.

In the description herein, unless otherwise stated, the term "or" is inclusive. In other words, the phrase "A or B" means "A, B, or both A and B". More specifically, the condition "A or B" is satisfied by any one of the following conditions: A is true (or present) and B is false (or absent); A is false (or absent) and B is true (or present); or both A and B are true (or present).

In the description herein, it is to be noted that, unless otherwise stated, the "above" and "below" are inclusive of the said numbers, and "more" in "one or more" means two or more than two.

Unless otherwise stated, the terms used herein have well-known meanings commonly understood by those skilled in the art. Unless otherwise specified, the numerical values of the various parameters mentioned in the present application may be measured by using various commonly used measurement methods in the field (for example, they may be tested according to the methods given in the embodiments of the present application).

### Secondary battery

A secondary battery refers to a battery that can be used continually by activating an active material in a charging manner, after the battery is discharged.

Generally, the secondary battery pack includes a positive electrode plate, a negative electrode plate, a separator and an electrolyte. During charging and discharging of the battery, active ions are intercalated and deintercalated back and forth between the positive electrode plate and the negative electrode plate. The separator is provided between the positive electrode plate and the negative electrode plate, and plays the role of separating. The electrolyte plays the role of conducting ions between the positive electrode plate and the negative electrode plate.

### [Separator]

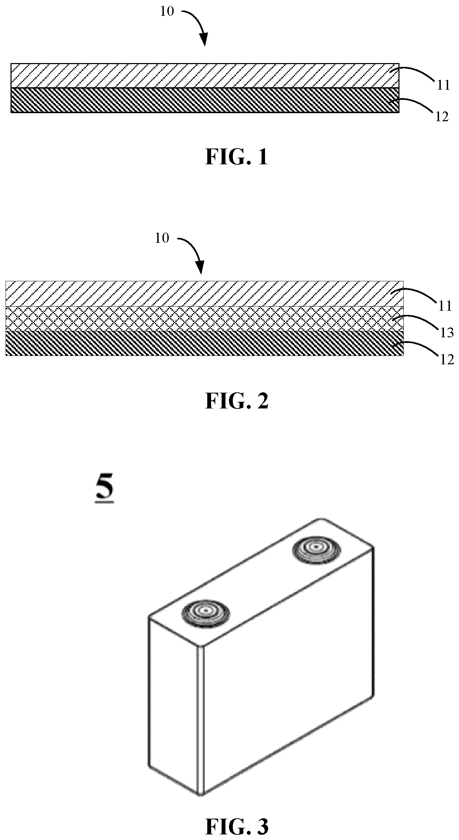

Referring to FIG. 1, the present application provides a separator 10, which includes a first base film 11 and a second base film 12. The melting point of the second base film 12 is lower than the melting point of the first base film 11. The porosity of the first base film 11 is denoted as P1, the porosity of the second base film 12 is denoted as P2, and 1.02≤P1/P2≤3.

Without wishing to be limited by any theory, the inventor has found through extensive research that selecting two types of base films with good porosity for compounding results in better air permeability and more favorable ion transport of the separator. This can be initially considered correct, but based on the current experimental results, the effect is not significant because good air permeability may lead to poor strength and breakdown, thus causing short-circuiting between the positive electrode and the negative electrode, and posing a safety hazard.

When the ratio of the porosity of the first base film to the porosity of the second base film satisfies 1.02≤P1/P2≤3, the air permeability and strength of the first base film and the second base film can be better balanced. The base film with high porosity has good air permeability, so the first base film with high porosity exhibits excellent air permeability; the base film with low porosity has good strength and is not easily punctured by dendrites, so the second base film with low porosity exhibits excellent strength, so that the separator has good air permeability and strength, thus improving the reliability and cycling performance of the secondary battery.

In any embodiment of the present application, 1.02≤P1/P2≤3, optionally 1.05≤P1/P2≤2.5. P1/P2 may be 1.02, 1.05, 1.13, 1.2, 1.3, 1.4, 1.5, 2.0, 2.3, 2.55, 3.0, or a range formed by any two numerical values described above. For example, it may be 1.02-1.13, 1.05-1.2, 1.2-2.5, 1.5-2.0, 1.2-1.5, 2.0-2.5, 2.5-3.0, 1.5-2.8, or the like. In this embodiment, the air permeability and strength of the first base film and the second base film can be better balanced, so that the separator has good air permeability and strength, thus improving the reliability and cycling performance of the secondary battery.

In any embodiment of the present application, the porosity of the first base film is 30%-90%, optionally 35%-85%; and/or the porosity of the second base film is 30%-70%, optionally 35%-45%. For example, the porosity of the first base film may be 30%, 35%, 38%, 40%, 50%, 55%, 60%, 70%, 75%, 80%, 85%, 90%, or a range formed by any two numerical values described above. For example, the porosity of the first base film may also be 30%-40%, 35%-45%, 50%-70%, 75%-80%, 80%-90%, or the like. The porosity of the second base film may be 30%, 35%, 40%, 45%, 50%, 60%, 65%, 70%, or a range formed by any two numerical values described above. For example, it may also be 30%-40%, 45%, 50%-60%, 65%-70%, or the like.

When the porosity of the first base film is 30%-90%, and/or the porosity of the second base film is 30%-70%, the air permeability and strength of the first base film and the second base film can be better balanced. The base film with high porosity has good air permeability, so it exhibits excellent air permeability. The base film with low porosity has good strength, so it exhibits good strength and is not easily punctured by dendrites. In this way, the separator has good air permeability and strength, thus improving the reliability and cycling performance of the secondary battery.

According to some embodiments, porosity has a meaning well known in the art, and may be tested by using any device and method known. For example, testing may be conducted with reference to GB/T 24586-2009. The testing method includes the following steps: punching a separator or a substrate into small circular samples with a diameter of 14mm, testing the thickness, and calculating the apparent volume V1 of the separator or the substrate according to a cylindrical volume calculation formula; referring to GB/T 24586-2009, using inert gas such as helium or nitrogen as a medium, adopting a gas displacement method, and measuring the true volume V2 of the separator or the substrate by using a true density tester. So, the porosity of the separator or the substrate is (V1-V2)/V1* 100%. The tester may be AccuPyc II 1340 fully automatic true density tester from Micromeritics in the United States.

In any embodiment of the present application, the ratio of the average pore size of the first base film to the average pore size of the second base film is 0.05-80, optionally 0.2-40. The ratio of the average pore size of the first base film to the average pore size of the second base film may be 0.05, 0.1, 0.2, 0.5, 1.0, 2.0, 6.0, 9.0, 13.0, 18.0, 20.0, 25.0, 30.0, 35.0, 40.0, 45.0, 50.0, 55.0, 60.0, 70.0, 80.0, or a range formed by any two numerical values described above. For example, it may also be 0.05-0.2, 0.2-1, 1-5, 5-8, 8-10, 10-14, 15-20, 20-30, 30-40, 40-60, 60-80, or the like.

The smaller the average pore size, the smaller the space occupied by the average pore area, the larger the space occupied by the fiber filaments of the base film, and the stronger the strength of the base film; on the contrary, the smaller the space occupied by the fiber filaments of the base film, the larger the average pore area of the separator, and the better the air permeability. By setting the ratio of the average pore diameters within the above range, the separator simultaneously has high air permeability and strength, thereby improving the reliability and cycling performance of the separator.

In any embodiment of the present application, the average pore size of the first base film is larger than the average pore size of the second base film.

In any embodiment of the present application, the average pore size of the first base film is 100nm-4000nm, optionally 100nm-2000nm. For example, the average pore size of the pore structure of the first base film may be 100nm, 150nm, 180nm, 200nm, 220nm, 250nm, 255nm, 285nm, 300nm, 325nm, 350nm, 400nm, 500nm, 750nm, 855nm, 955nm, 1000nm, 1250nm, 1350nm, 1500nm, 1750nm, 1850nm, 2000nm, 2300nm, 2500nm, 2700nm, 3000nm, 3300nm, 3600nm, 4000nm, or a range formed by any two numerical values described above. For example, it may also be 100nm-150nm, 100nm-400nm, 120nm-200nm, 200nm-250nm, 235nm-285nm, 300nm-350nm, 100nm-2000nm, 325nm-2000nm, 350nm-1850nm, 400nm-1750nm, 500nm-1500nm, 750nm-1350nm, 855nm-1250nm, 2000nm-3000nm, 3000nm-4000nm, 2500nm-3500nm, 1000-3000nm, 1000-4000nm, or the like.

The average pore size of the second base film is 50nm-2000nm, optionally 50nm-500nm. For example, the average pore size of the pore structure of the second base film may be 50nm, 75nm, 100nm, 120nm, 150nm, 180nm, 200nm, 225nm, 255nm, 300nm, 400nm, 500nm, 600nm, 700nm, 800nm, 1000nm, 1250nm, 1400nm, 1500nm, 1650nm, 1800nm, 1900nm, 2000nm, or a range formed by any two numerical values described above. For example, it may also be 50nm-100nm, 100nm-150nm, 150nm-200nm, 200nm-255nm, 250nm-300nm, 100nm-300nm, 50nm-500nm, 400nm-1900nm, 500nm-1800nm, 600nm-1650nm, 700nm-1500nm, 800nm-1400nm, 1000nm-1250nm, 1000nm-1900nm, 1000nm-2000nm, or the like. The requirements on the porosities of the two base films can be better met, so that the separator has good air permeability and strength, thus improving the reliability and cycling performance of the secondary battery.

According to some embodiments, the average pore size has a meaning well known in the art, and may be tested by using any method known in the art. For example, testing may be conducted with reference to GB/T 21650.1-2008 by adopting a mercury porosimeter.

In any embodiment of the present application, the transverse tensile strength of the first base film is less than the longitudinal tensile strength of the first base film. Through such arrangement, the separator has stronger ductility in the transverse direction, can resist puncture by dendrites and the like, and can inhibit the growth of dendrites.

In any embodiment of the present application, the ratio of the transverse tensile strength of the first base film to the longitudinal tensile strength of the first base film is 0.2-0.8, optionally 0.3-0.6. The ratio of the transverse tensile strength of the first base film to the longitudinal tensile strength of the first base film may be 0.2, 0.25, 0.3, 0.35, 0.4, 0.45, 0.5, 0.53, 0.62, 0.70, 0.75, 0.8, or a range formed by any two numerical values described above. For example, it may also be 0.2-0.3, 0.28-0.31, 0.38-0.42, 0.32-0.36, 0.42-0.51, 0.52-0.55, 0.55-0.61, 0.62-0.7, 0.7-0.75, 0.75-0.8, or the like.

Through such arrangement, on the premise of balancing the porosities of the first base film and the second base film to satisfy 1.02≤P1/P2≤3, and ensuring the air permeability of the separator, the strength of the separator can be increased and the ability to cope with stress deformation can be improved, thus further improving the reliability of the battery and extending the cycle life.

In any embodiment of the present application, the transverse tensile strength of the second base film is less than the longitudinal tensile strength of the second base film. Through such arrangement, the separator has stronger ductility in the transverse direction, can resist puncture by dendrites and the like, and can inhibit the growth of dendrites.

In any embodiment of the present application, the ratio of the transverse tensile strength of the second base film to the longitudinal tensile strength of the second base film is 0.45-0.9, optionally 0.6-0.8. The ratio of the transverse tensile strength of the second base film to the longitudinal tensile strength of the second base film may be 0.45, 0.5, 0.53, 0.62, 0.70, 0.75, 0.8, 0.85, 0.90, or a range formed by any two numerical values described above. For example, it may also be 0.45-0.49, 0.49-0.53, 0.54-0.59, 0.60-0.64, 0.66-0.70, 0.72-0.75, 0.76-0.81, 0.82-0.9, or the like. Through such arrangement, on the premise of balancing the porosities of the first base film and the second base film to satisfy 1.02≤P1/P2≤3, and ensuring the air permeability of the separator, the strength of the separator can be increased and the ability to cope with stress deformation can be improved, thus further improving the reliability of the battery and extending the cycle life.

In any embodiment of the present application, the transverse tensile strength of the first base film is less than the transverse tensile strength of the second base film. Through such arrangement, on the premise of balancing the porosities of the first base film and the second base film to satisfy 1.02≤P1/P2≤3, and ensuring the air permeability of the separator, the strength of the separator can be increased and the ability to cope with stress deformation can be improved, thus further improving the reliability of the battery and extending the cycle life.

In any embodiment of the present application, the longitudinal tensile strength of the first base film is less than the longitudinal tensile strength of the second base film. Through such arrangement, on the premise of balancing the porosities of the first base film and the second base film to satisfy 1.02≤P1/P2≤3, and ensuring the air permeability of the separator, the strength of the separator can be increased and the ability to cope with stress deformation can be improved, thus further improving the reliability of the battery and extending the cycle life.

In any embodiment of the present application, the transverse tensile strength of the first base film is 150-900Kgf/cm², optionally 200-750 Kgf/cm². For example, it may be 150 Kgf/cm², 200 Kgf/cm², 280 Kgf/cm², 360 Kgf/cm², 420 Kgf/cm², 550 Kgf/cm², 650 Kgf/cm², 680 Kgf/cm², 750 Kgf/cm², or a range formed by any two numerical values described above. For example, it may also be 150-200 Kgf/cm², 200-280 Kgf/cm², 280-350 Kgf/cm², 360-420 Kgf/cm², 450-550 Kgf/cm², 580-680 Kgf/cm², 650-680 Kgf/cm², 650-750 Kgf/cm², or the like.

In any embodiment of the present application, the longitudinal tensile strength of the first base film is 800-2500 Kgf/cm², optionally 1100-1900 Kgf/cm². For example, it may be 800 Kgf/cm², 880 Kgf/cm², 960 Kgf/cm², 1080 Kgf/cm², 1150 Kgf/cm², 1320 Kgf/cm², 1550 Kgf/cm², 1680 Kgf/cm², 1750 Kgf/cm², 1850 Kgf/cm², 1980 Kgf/cm², 2050 Kgf/cm², 2280 Kgf/cm², 2500 Kgf/cm², or a range formed by any two numerical values described above. For example, it may also be 800-880 Kgf/cm², 880-960 Kgf/cm², 960-1080 Kgf/cm², 1080-1150 Kgf/cm², 1150-1320 Kgf/cm², 1320-1550 Kgf/cm², 1550-1680 Kgf/cm², 1750-1980 Kgf/cm², 1950-2280 Kgf/cm², 2250-2500 Kgf/cm², or the like.

In any embodiment of the present application, the transverse tensile strength of the second base film is 1500-3600 Kgf/cm², optionally 1800-3300 Kgf/cm². For example, it may be 1500 Kgf/cm², 1680 Kgf/cm², 1860 Kgf/cm², 1980 Kgf/cm², 2150 Kgf/cm², 2320 Kgf/cm², 2550 Kgf/cm², 2680 Kgf/cm², 2750 Kgf/cm², 2850 Kgf/cm², 2980 Kgf/cm², 3050 Kgf/cm², 3280 Kgf/cm², 3300 Kgf/cm², or a range formed by any two numerical values described above. For example, it may also be 1500-1880 Kgf/cm², 1880-1960 Kgf/cm², 1960-2080 Kgf/cm², 2080-2150 Kgf/cm², 2150-2320 Kgf/cm², 2320-2550 Kgf/cm², 2550-2680 Kgf/cm², 2750-2980 Kgf/cm², 2950-3280 Kgf/cm², 3250-3300 Kgf/cm², or the like.

In any embodiment of the present application, the longitudinal tensile strength of the second base film is 1900-4000 Kgf/cm², optionally 2000-3500 Kgf/cm². For example, it may be 1900 Kgf/cm², 1980 Kgf/cm², 2060 Kgf/cm², 2180 Kgf/cm², 2250 Kgf/cm², 2320 Kgf/cm², 2550 Kgf/cm², 2680 Kgf/cm², 2750 Kgf/cm², 2850 Kgf/cm², 2980 Kgf/cm², 3050 Kgf/cm², 3280 Kgf/cm², 3300 Kgf/cm², 3550 Kgf/cm², 3780 Kgf/cm², 4000 Kgf/cm², or a range formed by any two numerical values described above. For example, it may also be 1900-1980 Kgf/cm², 1980-2060 Kgf/cm², 1960-2080 Kgf/cm², 2080-2150 Kgf/cm², 2150-2320 Kgf/cm², 2320-2550 Kgf/cm², 2550-2680 Kgf/cm², 2750-2980 Kgf/cm², 2950-3280 Kgf/cm², 3250-3300 Kgf/cm², 3150-3380 Kgf/cm², 3450-3680 Kgf/cm², 3850-4000 Kgf/cm², or the like. Through such arrangement, on the premise of balancing the porosities of the first base film and the second base film to satisfy 1.02≤P1/P2≤3, and ensuring the air permeability of the separator, the strength of the separator can be increased and the ability to cope with stress deformation can be improved, thus further improving the reliability of the battery and extending the cycle life.

The transverse tensile strength (TD) and the longitudinal tensile strength (MD) of the separator or the substrate have well-known meanings in the art, and may be measured by using any method known in the art. For example, testing may be conducted with reference to GB/T 36363-2018.

In any embodiment of the present application, the thickness of the first base film is 2µm-12µm, optionally 3µm-6µm. For example, it may be 2µm, 2.5µm, 2.6µm, 5µm, 7µm, 9µm, 10µm, 12µm, or a range formed by any two numerical values described above. For example, it may also be 1 µm-2.5µm, 2µm-2.6µm, 3µm-6µm, 5µm-9µm, 10µm-12µm, or the like.

In some embodiments, the thickness of the second base film is 2µm-12µm, optionally 3µm-5µm. For example, it may be 2µm, 3µm, 3.5µm, 5µm, 9µm, 10µm, 12µm, or a range formed by any two numerical values described above. For example, it may also be 2µm-3.5µm, 3µm-5µm, 5µm-6µm, 9µm-12µm, or the like.

When the thickness of the first base film and the thickness of the second base film are 2µm-12µm, the air permeability and strength of the base films can be balanced. On the premise that the air permeability and strength of the separator meet the requirements, the thickness of the separator can more easily meet the energy density requirements of the battery.

According to some embodiments, the thickness has a meaning well known in the art, and may be tested by using any method known in the art. For example, six groups of parallel samples are taken and a ten thousand foot thickness gage is used to measure the thickness of each group of samples at different positions. At least 20 points are measured for each group sample. The average thickness of the six groups of samples is taken as the thickness of the base film.

In any embodiment of the present application, the ratio of the melting point of the first base film to the melting point of the second base film is greater than or equal to 1.05 and less than or equal to 3.0, optionally greater than or equal to 1.1 and less than or equal to 2.5. For example, the ratio of the Celsius melting point of the first base film to the Celsius melting point of the second base film may be 1.05, 1.1, 1.2, 1.3, 1.35, 1.5, 1.6, 1.75, 1.95, 2.0, 2.2, 2.5, 2.6, 2.7, 2.9, 3.0, or a range formed by any two numerical values described above. For example, it may also be 1.05-1.2, 1.2-1.4, 1.35-1.5, 1.5-1.65, 1.6-1.75, 1.1-2.0, 1.1-2.5, 1.95-2.1, 2.2-2.5, 2.5-3.0, or the like. In some embodiments, the ratio of the Celsius melting point of the first base film to the Celsius melting point of the second base film may be 1.1-2.5.

When the ratio of the melting point of the first base film to the melting point of the second base film is greater than or equal to 1.05 and less than or equal to 3.0, the first base film with a higher melting point mainly contributes its heat resistance, or in other words, the base film with higher porosity has a higher melting point and better heat resistance; the second base film with low porosity mainly contributes its strength, so the compounding of the two can make the separator have both high strength and heat resistance. When the ratio of the melting point of the first base film to the melting point of the second base film is optionally greater than or equal to 1.1 and less than or equal to 2.5, the strength and heat resistance of the separator can be further improved.

In any embodiment of the present application, the melting point of the first base film is 160°C-360°C. For example, it may be 160°C, 165°C, 170°C, 180°C, 196°C, 200°C, 235°C, 245°C, 260°C, 280°C, 290°C, 300°C, 315°C, 320°C, 330°C, 340°C, 350°C, 360°C, or a range formed by any two numerical values described above. For example, it may also be 160°C-170°C, 180°C-235°C, 180°C-350°C, 225°C-280°C, 290°C-315°C, 300°C-360°C, or the like. In some embodiments, the melting point of the first base film may be 180°C-350°C. The melting point of the second base film is 120°C-280°C. For example, it may be 120°C, 130°C, 135°C, 140°C, 150°C, 155°C, 180°C, 200°C, 230°C, 265°C, 280°C, or a range formed by any two numerical values described above. For example, it may also be 120°C-135°C, 130°C-150°C, 135°C-150°C, 145°C-155°C, 150°C-250°C, 250°C-280°C, 300°C-265°C, 120°C-280°C, or the like. In some embodiments, the melting point of the second base film may be 130°C-265°C, optionally 130°C-265°C.

When the melting point of the first base film is 160°C-360°C and/or the melting point of the second base film is 120°C-280°, the melting point of the first base film is higher than the melting point of the second base film. The first base film with a higher melting point mainly contributes its heat resistance, while the second base film with stronger strength mainly contributes its strength, so the compounding of the two can make the separator have both high strength and heat resistance. When the melting point of the first base film is optionally 180°C-350°C and/or the melting point of the second base film is optionally 130°C-265°C, the strength and heat resistance of the separator can be further improved.

According to some embodiments, the melting point has a meaning well known in the art, and may be determined by using any method known in the art. For example, it can be determined by using differential scanning calorimetry. For details, a reference may be made to standard GB/T 19466.3-2004. As an example, it may be determined according to a method including the following steps: taking 4-6mg of samples to be tested, placing them in a sample chamber of a differential scanning calorimeter, raising the temperature from 25°C to 400°C at a rate of 10°C/min, and obtaining a melting endothermic curve of the samples. The temperature corresponding to the peak of the curve is the melting point of the samples.

The inventor has found through in-depth research that, on the premise that the secondary battery in the present application satisfies the above conditions, optionally one or more of the following conditions, the performance of the secondary battery can be further improved.

The materials of the first base film and the second base film are not specially limited. Any well-known base film with good chemical stability and strength stability may be selected. The materials of the first base film and the second base film of the separator may be the same or different.

In any embodiment of the present application, each of the first base film and the second base film is at least one independently selected from the group consisting of polyolefins and derivatives thereof, halogenated polyolefins and derivatives thereof, polyethers and derivatives thereof, polyetheretherketones and derivatives thereof, polyesters and derivatives thereof, polyimides and derivatives thereof, polyvinyl alcohol and derivatives thereof, polytetrafluoroethylene and derivatives thereof, polyvinyl fluoride and derivatives thereof, polyvinylidene fluoride and derivatives thereof, and polyethylene terephthalate and derivatives thereof. Derivatives usually refer to products derived from the substitution of hydrogen atoms or atomic groups with other atoms or atomic groups in a compound. When the first base film and the second base film are respectively at least one of the materials described above, the porosity of the separator can be controlled within an appropriate range, thus improving the air permeability and strength of the separator during compounding, and thus improving the reliability and cycling performance of the secondary battery.

Referring to FIG. 1, an embodiment of the present application provides a separator 10, which includes a first base film 11 and a second base film 12. In any embodiment of the present application, a bonding layer 13 is further provided between the first base film 11 and the second base film 12, and the bonding layer includes a binder; optionally, the bonding layer includes a binder and a filler. When the bonding layer is provided between the first base film and the second base film, it can not only compensate for the process defects in the hot-pressing compounding process of the base films, but also further improve the physical properties of the separator (such as tensile strength, puncture strength, and heat resistance), thus improving the reliability of the secondary battery. The filler is located between the first base film and the second base film, thus avoiding the problem of powder falling.

The first base film and the second base film may be directly compounded by hot pressing. During the hot-pressing compounding process, if the temperature is too high, it will result in low porosity and poor air permeability; if the temperature is too low, it will cause that the first base film and the second base film are not bonded firmly. Therefore, the temperature needs to be adjusted to an appropriate hot-pressing temperature. Optionally, the hot-pressing temperature is 20°C-50°C.

In any embodiment of the present application, the binder includes one or more of polyacrylate, polyacrylic acid, polytetrafluoroethylene, polyvinylidene fluoride, vinylidene fluoride-trichloroethylene copolymer, polyvinyl pyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl pullulan. When the bonding layer is provided between the first base film and the second base film, and the bonding layer includes the above components, the separator simultaneously has high strength, heat resistance, and air permeability. The reliability and cycling performance of the secondary battery can be improved.

In any embodiment of the present application, the filler includes at least one of inorganic particles, organic particles, and organic-metal framework materials.

Optionally, the inorganic particles include one or more of inorganic particles with a dielectric constant of 5 or more, inorganic particles having ion conductivity but not storing ions, and inorganic particles capable of experiencing electrochemical reactions.

Optionally, the inorganic particles with a dielectric constant of 5 or more may include boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, magnesium lithium silicate, magnesium sodium silicate, bentonite, hectorite, zirconium titanate, barium titanate, Pb(Zr, Ti)O₃(abbreviated as PZT), Pb₁₋ₘLaₘZr₁₋ₙTiₙO₃(abbreviated as PLZT,0<m<1, 0<n<1), Pb(Mg₃Nb_{2/3})O₃-PbTiO₃(abbreviated as PMN-PT), and respective modified inorganic particles thereof. Optionally, methods for modifying each inorganic particle may be chemical modification methods and/or physical modification methods. The chemical modification methods include coupling agent modification (for example, using silane coupling agents or titanium ester coupling agents), surfactant modification, polymer grafting modification, and the like. The physical modification methods may include mechanical dispersion, ultrasonic dispersion, high-energy treatment, and the like. Modification treatment can reduce the aggregation of inorganic particles, thus making the bonding layer have a more stable and uniform structure. In addition, by selecting coupling agents, surfactants, or polymers with specific functional groups to modify inorganic particles, it also helps to improve the wetting and retention characteristics of the bonding layer to the electrolyte, and enhance the adhesion of the bonding layer to the first base film and the second base film.

Optionally, the inorganic particles having ion conductivity but not storing ions may include at least one of Li₃PO₄, lithium titanium phosphate Liₓ₁Ti_{y1}(PO₄)₃, lithium titanium aluminum phosphate Liₓ₂Al_{y2}Ti_{z1}(PO₄)₃, (LiAlTiP)ₓ₃O_{y3}glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂glass Liₓ₇Si_{y7}S_{z3}, and P₂S₅glass Liₓ₈P_{y8}S_{z4},where 0<x1<2, 0<y1<3, 0<x2<2, 0<y2<1, 0<z1<3, 0<x3<4, 0<y3<13, 0<x4<2, 0<y4<3, 0<x5<4, 0<y5<1, 0<z2<1, 0<w<5, 0<x6<4, 0<y6<2, 0<x7<3, 0<y7<2, 0<z3<4, 0<x8<3, 0<y8<3, 0<z4<7. In this way, the ion conductivity of the separator can be further improved.

Optionally, the inorganic particles capable of experiencing electrochemical reactions may include at least one of lithium-containing transition metal oxides, lithium-containing phosphates, carbon-based materials, silicon-based materials, tin-based materials, and lithium titanium compounds.

Optionally, the organic particles may include one or more of polycarbonate, polythiophene, polypyridine, polystyrene, polyacrylic acid wax, polyethylene, polypropylene, cellulose, cellulose modifiers (such as carboxymethyl cellulose), melamine resin, phenolic resin, polyester (such as polyethylene terephthalate, polyethylene naphthalate, and polybutylene terephthalate), organosilicon resin, polyimide, polyamide imide, polyarylamide, polyphenylene sulfide, polysulfone, polyether sulfone, polyether ether ketone, polyaryl ether ketone, copolymers of butyl acrylate and ethyl methacrylate (such as crosslinked polymers of butyl acrylate and ethyl methacrylate).

Optionally, the organic-metal framework materials may include one or more of nitrogencontaining heterocyclic ligand structures, organic carboxylic acid ligand structures, and nitrogencontaining oxygen mixed ligand structures.

**In** some embodiments, the content of the binder may be greater than or equal to 10%, optionally 10%-30%, based on the total weight of the bonding layer.

**In** some embodiments, the content of the filler may be less than or equal to 90%, optionally 40%-90% and 60%-80%, based on the total weight of the bonding layer.

**In** some embodiments, the bonding layer may further include a dispersant, such as carboxymethyl cellulose, thus adjusting the viscosity of the bonding layer slurry, and improving the quality and uniformity of the bonding layer.

**In** some embodiments, the content of the dispersant may be greater than or equal to 25%, optionally less than or equal to 20%, based on the total weight of the bonding layer.

When the bonding layer is provided between the first base film and the second base film, and the filler in the bonding layer includes at least one of the inorganic particles, organic particles, and organic-metal framework materials described above, the filler in the bonding layer can further improve the heat resistance and strength of the separator, thus improving the reliability of the secondary battery.

In any embodiment of the present application, the thickness of the bonding layer is greater than or equal to 0.3 µm, optionally 0.5-2 µm. When the thickness of the bonding layer is within the given range, the reliability of the secondary battery can be improved.

In any embodiment of the present application, the air permeability of the separator is 200s/100cc-400s/100cc, optionally 250s/100cc-320s/100cc; and/or the porosity of the separator is optionally 25%-80%. When at least one of the properties of the separator is within the given range, the separator has good air permeability and strength, thus improving the reliability and cycling performance of the secondary battery.

In any embodiment of the present application, a method for preparing a separator includes: providing a first base film and a second base film, where the melting point of the second base film is lower than the melting point of the first base film, and the ratio of the porosity of the first base film to the porosity of the second base film satisfies 1.02≤P1/P2≤3; and compounding the first base film and the second base film to obtain the separator. In this way, the separator has good air permeability and strength, thus improving the reliability and cycling performance of the secondary battery.

In any embodiment of the present application, the method further includes providing a bonding layer slurry, where the bonding layer slurry includes a binder; and arranging the bonding layer slurry on the first base film and/or the second base film to form a bonding layer, where the bonding layer is located between the first base film and the second base film after compounding.

The bonding layer slurry further includes a filler; optionally, the filler includes at least one of inorganic particles, organic particles, and organic-metal framework materials. In this way, the separator has good air permeability and strength, thus improving the reliability and cycling performance of the secondary battery.

In any embodiment of the present application, a bonding layer slurry is prepared, the bonding layer slurry includes a binder, the bonding layer slurry is coated on the first base film and/or the second base film, and then compounding is performed; optionally, the bonding layer slurry includes a binder and a filler. When the bonding layer slurry is coated on the first base film and/or the second base film, then compounding is performed, and the bonding layer slurry includes the above components, the reliability of the secondary battery can be improved.

Unless otherwise specified, all raw materials (for example, the first base film, the second base film, the binder, the filler, and the like) used in the separator may be obtained commercially.

In any embodiment of the present application, a secondary battery includes a positive electrode plate, a negative electrode plate, and the separator provided in any one of the solutions of the present application or the separator prepared by adopting the method for preparing a separator provided in any one of the solutions of the present application. The separator is provided between the positive electrode plate and the negative electrode plate. When the secondary battery adopts the given separator, the reliability and cycling performance of the secondary battery can be improved.

In any embodiment of the present application, the second base film of the separator faces towards the negative electrode plate. The first base film has good heat resistance and faces towards the positive electrode, while the second base film has high strength and faces towards the negative electrode, thus improving the puncture resistance to lithium dendrites and improving the reliability of the secondary battery.

In any embodiment of the present application, an electrical apparatus includes the secondary battery according to any one of the solutions of the present application. When the secondary battery of the electrical apparatus adopts the given separator, the reliability of the electrical apparatus can be improved.

Since the electrical apparatus in the present application includes the battery module provided in the present application, it at least has the same advantages as the secondary battery.

### [Positive electrode plate]

In the secondary battery, the positive electrode plate includes a positive electrode current collector and a positive electrode film layer provided on the positive electrode current collector, and the positive electrode film layer includes a positive electrode active material.

The positive electrode current collector may be made of a conventional metal foil or be a composite current collector (a metal material may be provided on a polymer substrate to form a composite current collector). As an example, the positive electrode current collector may be made of an aluminum foil.

The specific type of the positive electrode active material is not limited. Any material that can be used as the positive electrode active material of the secondary battery known in the art may be used, and may be selected by those skilled in the art according to the actual need.

In some embodiments, the positive electrode active material may include, but not limited to, one or more of lithium transition metal oxides, olivine-structured lithium-containing phosphates, and respective modified compounds thereof. Examples of the lithium transition metal oxides may include, but not limited to, one or more of lithium-cobalt oxide, lithium-nickel oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide, and modified compounds thereof. Examples of the olivine-structured lithium-containing phosphates may include, but not limited to, one or more of lithium iron phosphate, composites of lithium iron phosphate and carbon, lithium manganese phosphate, composites of lithium manganese phosphate and carbon, lithium manganese iron phosphate, composites of lithium manganese iron phosphate and carbon, and modified compounds thereof. These materials are all commercially available.

The modified compounds of the above materials may be obtained by doping modification and/or surface coating modification of the materials.

The positive electrode film layer usually optionally includes a binder, a conductive agent, and other optional auxiliaries.

As an example, the conductive agent may be one or more of superconducting carbon, acetylene black, carbon black, Ketjen black, carbon dot, carbon nanotube, conductive carbon black (Super P, SP), graphene, and carbon nanofiber.

As an example, the binder may be one or more of Polymerized Styrene Butadiene Rubber (SBR), water-based acrylic resin, Polyvinylidene Difluoride (PVDF), Polytetrafluoroethylene (PTFE), Ethylene-vinyl Acetate Copolymer (EVA), Polyacrylic Acid (PAA), Carboxymethyl Cellulose (CMC), Polyvinyl Alcohol or Vinyl alcohol Polymer (PVA), and Polyvinyl Butyral (PVB).

### [Negative electrode plate]

In the secondary battery, the negative electrode plate includes a negative electrode current collector and a negative electrode film layer provided on the negative electrode current collector, and the negative electrode film layer includes a negative electrode active material.

The negative electrode current collector may be made of a conventional metal foil or be a composite current collector (for example, a metal material may be provided on a polymer substrate to form a composite current collector). As an example, the negative electrode current collector may be made of a copper foil.

The specific type of the negative electrode active material is not limited. Any material that can be used as the negative electrode active material of the secondary battery as known in the art may be used, and may be selected by those skilled in the art according to the actual need. As an example, the negative electrode active material may include, but not limited to, one or more of artificial graphite, natural graphite, hard carbon, soft carbon, silicon-based materials, and tin-based materials. The silicon-based materials may be one or more selected from the group consisting of elemental silicon, silicon oxide compounds (for example. silicon monoxide), silicon-carbon composites, silicon-nitrogen composites, and silicon alloy. The tin-based materials may be one or more selected from the group consisting of elemental tin, tin-oxide compound and tin alloy. These materials are all commercially available.

In some embodiments, in order to further improve the energy density of the battery, the negative electrode active material may include silicon-based materials.

The negative electrode film layer usually optionally includes a binder, a conductive agent, and other optional auxiliaries.

As an example, the conductive agent may be one or more of superconducting carbon, acetylene black, carbon black, Ketjen black, carbon dot, carbon nanotube, graphene, and carbon nanofiber.

As an example, the binder may be one or more of styrene butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

As an example, the other optional auxiliaries may be thickeners, dispersants (such as Carboxymethylcellulose Sodium, CMC-Na), and PTC thermistor materials.

### [Electrolyte]

The secondary battery may include an electrolyte. The electrolyte plays a role in conducting ions between the positive electrode and the negative electrode. The electrolyte may include an electrolyte salt and a solvent.

As an example, the electrolyte salt may be one or more selected from the group consisting of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro bis(oxalato)phosphate (LiDFOP), and lithium tetrafluoro(oxalato)phosphate (LiTFOP).

As an example, the solvent may be one or more selected from the group consisting of Ethylene Carbonate (EC), Propylene Carbonate (PC), Methyl Ethyl Carbonate (EMC), Diethyl Carbonate (DEC), Dimethyl Darbonate (DMC), Dipropyl Carbonate (DPC), Methyl Propyl Carbonate (MPC), Diisopropyl Carbonate (EPC), Butylene Carbonate (BC), Fluoroethylene Carbonate (FEC). Methyl Formate (MF), Methyl Acetate (MA), Ethyl Acetate (EA), n-Propyl Acetate (PA), Methyl Propionate (MP) One or more of Ethyl Propionate (EP), n-Propyl Propionate (PP), Methyl Butyrate (MB), Ethyl Butyrate (EB), 1,4-Butyrolactone (GBL), Tetramethylene Sulfone (SF), Dimethyl Sulfone (MSM), Methyl Ethyl Sulfone (EMS), and Diethyl Sulfone (ESE).

In some embodiments, the electrolyte may further include an additive. For example, the additive may include a negative electrode film-forming additive, or may include a positive electrode film-forming additive, and may further include an additive capable of improving certain performance of the battery, such as an additive for improving the overcharging performance of the battery, an additive for improving the high temperature performance of the battery, or an additive for improving the low temperature performance of the battery.

In some embodiments, the secondary battery may be a lithium-ion secondary battery. In any embodiment of the present application, the second base film of the separator faces towards the negative electrode plate.

When the porosity of the first base film is greater than the porosity of the second base film, the air permeability and strength of the first base film and the second base film can be better balanced. The base film with high porosity has good air permeability, so the first base film with high porosity exhibits excellent air permeability; the base film with low porosity has good strength and is not easily punctured by lithium dendrites, so that the separator has good air permeability and strength, thus improving the reliability of the secondary battery.

The shape of the secondary battery is not specially limited in this embodiment of the present application, which can be a cylindrical shape, a square shape or any other shape. For example, FIG. 3 shows a secondary battery 5 with a square structure as an example.

In some embodiments, the secondary battery may include an outer package. The outer package may be used for encapsulating the positive electrode plate, the negative electrode plate, and the electrolyte. The second base film of the separator faces towards the negative electrode plate.

In some embodiments, the outer package of the secondary battery may be a hard case, such as a hard plastic case, an aluminum case, or a steel case. The outer package of the secondary battery may also be a soft package, such as a bag-type soft package. The material of the soft package may be plastic, and for example, may include one of more of Polypropylene (PP), Polybutylene Terephthalate (PBT), and Polybutylene Succinate (PBS).

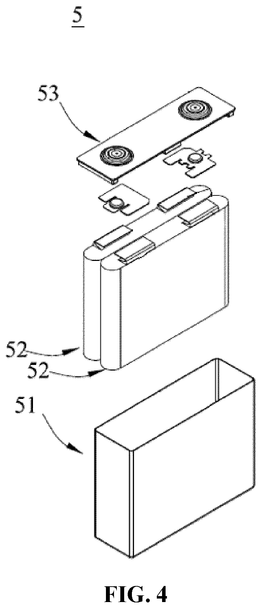

In some embodiments, referring to FIG. 4, the outer package may include a case 51 and a cover plate 53. The case 51 may include a bottom plate and a side plate connected to the bottom plate. The bottom plate and the side plate enclose to form an accommodating cavity. The case 51 is provided with an opening communicated with the accommodating cavity. The cover plate 53 may cover the opening to close the accommodating cavity.

The method for preparing the secondary battery in the present application is well known. In some embodiments, the positive electrode plate, the separator, the negative electrode plate, and the electrolyte may be assembled to form the secondary battery. As an example, the positive electrode plate, the separator, and the negative electrode plate may be wound and/or laminated to form an electrode assembly. The electrode assembly is placed in the outer package, dried, and then injected with electrolyte. After vacuum packaging, standing, formation, shaping, and other processes, a battery cell may be obtained. Multiple battery cells may be further connected in series, parallel, or parallel-series to form a battery module. Multiple battery modules may be further connected in series, parallel, or parallel-series to form a battery pack. In some embodiments, multiple battery cells may also directly form a battery pack.

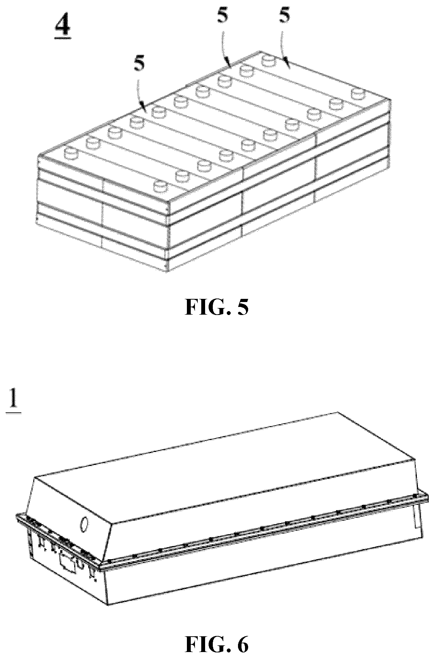

FIG. 5 shows a battery module 4 as an example. Referring to FIG. 5, in the battery module 4, multiple secondary batteries 5 may be sequentially arranged along a length direction of the battery module 4. Of course, any other arrangement is also possible. The multiple secondary batteries 5 may be further fixed by fasteners.

The battery module 4 may further include a shell with an accommodating space. The multiple secondary batteries 5 are accommodated in the accommodating space.

In some embodiments, the battery modules may further be assembled into a battery pack, and the number of battery modules contained in the battery pack may be adjusted according to the application and capacity of the battery pack.

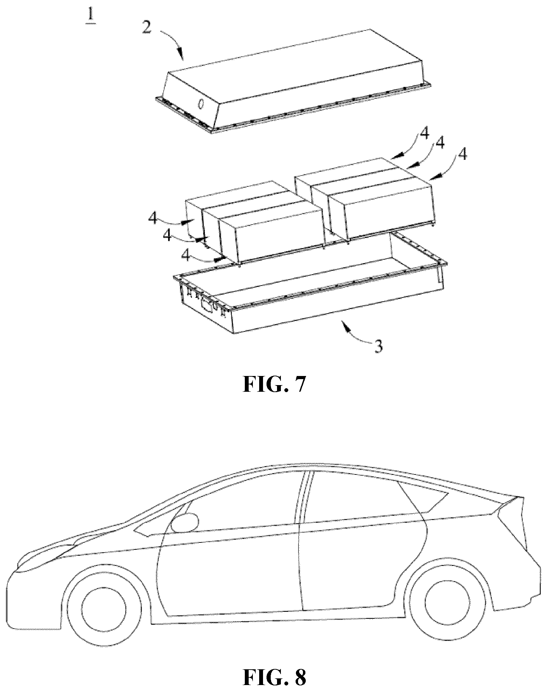

FIG. 6 and FIG. 7 show a battery pack 1 as an example. Referring to FIG. 6 and FIG. 7, the battery pack 1 may include a battery box and multiple battery modules 4 arranged in the battery box. The battery box includes an upper box body 2 and a lower box body 3. The upper box body 2 may cover the lower box body 3 to form an enclosed space for accommodating the battery modules 4. The multiple battery modules 4 may be arranged in the battery box in any manner.

### [Apparatus]

The present application further provides an electrical apparatus, which includes the secondary battery in the present application. The battery cell, the battery module or the battery pack may be used as a power source of the electrical apparatus or an energy storage unit of the electrical apparatus. The electrical apparatus may be, but not limited to, a mobile device (for example, a mobile phone or a laptop), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, or an energy storage system.

The battery cell, battery module or battery pack in the electrical apparatus may be selected according to its use requirements.

FIG. 8 shows an electrical apparatus as an example. The electrical apparatus may be a pure electric vehicle, a hybrid electric vehicle, or a plug-in hybrid electric vehicle. In order to meet the demands of the electrical apparatus for high power and high energy density of the secondary battery, a battery pack or a battery module may be used.

As another example, the electrical apparatus may be a mobile phone, a tablet, or a laptop. The electrical apparatus is generally required to be thin and light, so a battery cell may be used as a power source.

Since the electrical apparatus in the present application includes the battery module provided in the present application, it at least has the same advantages as the secondary battery.

The beneficial effects of the present application will be further described below in combination with the embodiments.

In order to make the technical problems to be solved, technical solutions, and beneficial effects of the embodiments of the present application clearer, further detailed description will be made in combination with the embodiments with reference to the drawings. Clearly, the embodiments described are only some embodiment instead of all embodiments of the present application. The following description of at least one exemplary embodiment is merely descriptive in fact, which is not intended to limit the present application and its application in any manner. Based on the embodiments of the present application, all other embodiments obtained by a person of ordinary skills in the art without contributing any inventive labor still fall within the scope of protection of the present application.

### I. Preparation of separator

### Separator 1:

(1) A first base film and a second base film were provided. The material of the first base film included polypropylene (PP), and the material of the second base film included polyethylene (PE). The ratio of the porosity of the first base film to the porosity of the second base film was controlled within a target range.
(2) A bonding layer slurry was provided. Boehmite, polyacrylate, and carboxymethyl cellulose were mixed according to a ratio of 4:1:1 in an appropriate amount of deionized water used as a solvent to prepare the bonding layer slurry.
(3) The bonding layer slurry obtained in step (2) was coated onto at least one side of the first base film and the second base film in step (1) for compounding to form a bonding layer.

The methods for preparing the separators in examples 2-11 were similar to the method for preparing the separator in example 1, and the difference lay in that the material or porosity of the base films was adjusted.

Separators 1-11 further satisfied the following conditions: the transverse tensile strength of the first base film was less than the longitudinal tensile strength of the first base film; the ratio of the transverse tensile strength of the first base film to the longitudinal tensile strength of the first base film was 0.2-0.8; the transverse tensile strength of the second base film was less than the longitudinal tensile strength of the second base film; the ratio of the transverse tensile strength of the second base film to the longitudinal tensile strength of the second base film was 0.45 -0.9; the transverse tensile strength of the first base film was less than the transverse tensile strength of the second base film; and the longitudinal tensile strength of the first base film was less than the longitudinal tensile strength of the second base film. In example 1, the transverse tensile strength of the first base film was 600 Kgf/cm², and the longitudinal tensile strength of the first base film was 1250 Kgf/cm²; the transverse tensile strength of the second base film was 1350 Kgf/cm², and the longitudinal tensile strength of the second base film was 1700 Kgf/cm²; the transverse tensile strength of the separator was 1650 Kgf/cm², and the longitudinal tensile strength of the separator was 2700 Kgf/cm². In example 6, the transverse tensile strength of the first base film was 550 Kgf/cm², and the longitudinal tensile strength of the first base film was 700 Kgf/cm²; the transverse tensile strength of the second base film was 650 Kgf/cm², and the longitudinal tensile strength of the second base film was 1300 Kgf/cm²; the transverse tensile strength of the separator was 800 Kgf/cm², and the longitudinal tensile strength of the separator was 2000 Kgf/cm². In example 9, the transverse tensile strength of the first base film was 550 Kgf/cm², and the longitudinal tensile strength of the first base film was 700 Kgf/cm²; the transverse tensile strength of the second base film was 1450 Kgf/cm², and the longitudinal tensile strength of the second base film was 1850 Kgf/cm²; the transverse tensile strength of the separator was 1500 Kgf/cm², and the longitudinal tensile strength of the separator was 2500 Kgf/cm².

Relevant performance tests were conducted on the separators prepared by adopting the above methods. The specific results were as shown in Table 1.

### II. Preparation of battery

### Example 1

### 1. Preparation of positive electrode plate

A positive electrode active material LiNi_{0.8}Co_{0.1}Mn_{0.1}O₂(NCM811), a conductive agent carbon black (SuperP), and a binder polyvinylidene fluoride (PVDF) were uniformly mixed in a solvent N-Methylpyrrolidone (NMP) according to a mass ratio of 96.2:2.7: 1.1 to obtain a positive electrode slurry, the positive electrode slurry was coated onto an aluminum foil used as a positive current collector, and then drying, cold pressing, slitting and cutting were performed to obtain a positive electrode plate. The surface density of the positive electrode was 0.207mg/mm², and the compacted density was 3.5g/cm³.

### 2. Preparation of negative electrode plate

A negative electrode active material artificial graphite, a conductive agent carbon black (SuperP), a binder styrene butadiene rubber (SBR), and carboxymethyl cellulose sodium (CMC-Na) were uniformly mixed according to a mass ratio of 96.4:0.7:1.8:1.1 in an appropriate amount of deionized water used as a solvent to obtain a negative electrode slurry, the negative electrode slurry was coated onto a copper foil used as a negative electrode current collector, and drying, cold pressing, slitting, and cutting were performed to obtain a negative electrode plate. The surface density of the negative electrode was 0.126mg/mm², and the compacted density was 1.7g/cm³.

### 3. Separator

The separator 1 prepared above was used as the separator.

### 4. Preparation of electrolyte

Ethylene carbonate (EC) and methyl ethyl carbonate (EMC) were mixed according to a mass ratio of 30:70 to obtain an organic solvent, fully dried electrolyte salt LiPF₆was dissolved in the above mixed solvent, the concentration of the electrolyte salt was 1.0mol/L, and then uniform mixing was performed to obtain an electrolyte.

### 5. Preparation of secondary battery

The positive electrode plate, the separator and the negative electrode plate were stacked in sequence, so that the separator was located between the positive electrode plate and the negative electrode plate to play a role of separating, and then winding was performed to obtain an electrode assembly; the electrode assembly was placed in an outer package, the electrolyte prepared above was filled into a dried secondary battery, and then vacuum encapsulation, standing, formation and shaping were performed to obtain a secondary battery.

The methods for preparing the secondary batteries in examples 2-11 and comparative examples 1-3 were similar to the method for preparing the secondary battery in example 1, and the difference lay in that different separators were used (separators 1-11 were respectively used in examples 1-11, while separators 11 and 14 were used in comparative examples 1-3), as detailed in Table 1.

Unless otherwise specified, all raw materials (for example, the first base film, the second base film, the binder, the filler, and the like) used in the separator may be obtained commercially.

### III. Battery performance test

### 1. 250°C heat shrinkage test

The method for testing the heat shrinkage of the separator was as follows:
(1) Sample preparation: a punching machine was used to perform punching to obtain samples with a width of 50mm and a length of 100mm, the number of parallel samples was 5-10, the samples were placed on a glass plate, and the four sides were fixed with paper clips. (2) Testing: the temperature of the blast oven was set to a specified temperature, such as 250°C; after the temperature reached the set temperature and became stable for 60min, the glass plate was placed in the oven for 1h, the length of the separators was measured, and the value was denoted as a. (3) Calculation: machine-direction shrinkage was A=(100-a)/100* 100%; the value of A was recorded, and the values obtained at five times were averaged.

### 2. Battery cycling performance test

The method for determining the capacity retention rate of a full battery at 25°C was as follows: the battery was charged at a constant current of 1C to 4.55V at 25°C, then charged at a constant voltage of 4.55V until the current decreased to 0.05C, and then discharged at a constant current of 1C to 2.5V to obtain the first-cycle discharge specific capacity (Cd1); after charging and discharging were repeated for 100 cycles, the discharge specific capacity of the lithium-ion battery after n cycles was obtained and denoted as (Cdn). Capacity retention rate=discharge specific capacity after n cycles/first-cycle discharge specific capacity.

**Table 1: test results of performance of batteries in examples and comparative examples**

| S/N | | | Example | | | | | | | | | | | Comparative example | | |
|---|---|---|---|---|---|---|---|---|---|---|---|---|---|---|---|---|
| | | | 1 | 2 | 3 | 4 | 5 | 6 | 7 | 8 | 9 | 10 | 11 | 1 | 2 | 3 |
| Separator structure | First base film | Material | PP | PP | PP | PP | PP | PTF E | PTF E | PTF E | PTF E | PTF E | PTF E | PP | PTF E | PTF E |
| | | Porosity % | 43.9 | 39.3 | 50.4 | 50.3 | 80.3 | 35.4 | 65.8 | 85.2 | 37.5 | 44.1 | 48.6 | 21.3 | 35.4 | 89.5 |
| | Seco nd base film | Material | PE | PE | PE | PE | PE | PP | PE | PE | PE | PE | PE | PE | PE | PE |
| | | Porosity % | 43 | 38.6 | 40.3 | 35.2 | 30.1 | 30.3 | 41.3 | 45.2 | 35.7 | 35.3 | 33.5 | 35.5 | 35.4 | 21.3 |
| | Ratio of porosity of first base film to porosity of second base film | | 1.02 | 1.02 | 1.25 | 1.43 | 2.67 | 1.17 | 1.59 | 1.88 | 1.02 | 1.25 | 1.45 | 0.6 | 1.0 | 4.2 |
| Performa nce test | Porosity % of separator | | 43 | 36 | 39 | 35 | 30 | 30 | 40 | 44 | 34 | 34 | 32 | 36 | 33 | 22 |
| | 250°C heat shrinkage % | | 0.38 | 0.35 | 0.42 | 0.35 | 0.95 | 0.21 | 0.31 | 0.42 | 0.22 | 0.23 | 0.25 | 0.15 | 0.21 | 0.65 |
| | Cycling capacity retention rate % | | 97.1 % | 97.3 % | 98.5 % | 97.5 % | 94.6 % | 93.8 % | 97.2 % | 98.1 % | 95.4 % | 98.2 % | 96.3 % | 80.5 % | 90.3 % | 85.1 % |

From Table 1, it can be seen that in examples 1-11, the porosity of the first base film (P1) and the porosity of the second base film (P2) satisfy 1.02≤P1/P2≤3, and the melting point of the second base film is lower than the melting point of the first base film; the battery prepared by using the separator provided in the present application has higher capacity retention rate and safety reliability.

To sum up, what are described above are only specific embodiments of the present application. However, the scope of the present application is not limited thereto. Within the technical scope disclosed in the present application, those skilled in the art may readily conceive of various equivalent modifications or replacements, which, however, still fall within the scope of the present application. Therefore, the scope of the present application shall be determined with reference to the scope of the claims.

## Claims

1. A separator, comprising:
a first base film; and
a second base film, wherein the melting point of the second base film is lower than the melting point of the first base film,
wherein the porosity of the first base film is denoted as P1, the porosity of the second base film is denoted as P2, and 1.02≤P1/P2≤3.

2. The separator according to claim 1, wherein 1.05≤P1/P2≤2.5.

3. The separator according to claim 1 or 2, wherein
the porosity of the first base film is 30%-90%, optionally 35%-85%; and/or
the porosity of the second base film is 30%-70%, optionally 35%-45%.

4. The separator according to any one of claims 1-3, wherein
the ratio of the average pore size of the first base film to the average pore size of the second base film is 0.05-80, optionally 0.2-40;
optionally, the average pore size of the first base film is larger than the average pore size of the second base film;
optionally, the average pore size of the first base film is 100nm-4000nm, optionally 100nm-2000nm;
optionally, the average pore size of the second base film is 50nm-2000nm, optionally 50nm-500nm.

5. The separator according to any one of claims 1-4, wherein the transverse tensile strength of the first base film is less than the longitudinal tensile strength of the first base film; and the ratio of the transverse tensile strength of the first base film to the longitudinal tensile strength of the first base film is 0.2-0.8, optionally 0.3-0.6.

6. The separator according to any one of claims 1-5, wherein the transverse tensile strength of the second base film is less than the longitudinal tensile strength of the second base film; optionally, the ratio of the transverse tensile strength of the second base film to the longitudinal tensile strength of the second base film is 0.45-0.9, optionally 0.6-0.8.

7. The separator according to any one of claims 1-6, wherein the transverse tensile strength of the first base film is less than the transverse tensile strength of the second base film; and/or,
the longitudinal tensile strength of the first base film is less than the longitudinal tensile strength of the second base film.

8. The separator according to any one of claims 1-7, wherein the separator satisfies at least one of (1)-(4):
(1) the transverse tensile strength of the first base film is 150-900Kgf/cm², optionally 200-750Kgf/cm²;
(2) the longitudinal tensile strength of the first base film is 800-2500Kgf/cm², optionally 1100-1900Kgf/cm²;
(3) the transverse tensile strength of the second base film is 1500-3600Kgf/cm², optionally 1800-3300Kgf/cm²;
(4) the longitudinal tensile strength of the second base film is 1900-4000Kgf/cm², optionally 2000-3500Kgf/cm².

9. The separator according to any one of claims 1-8, wherein
the ratio of the thickness of the first base film to the thickness of the second base film is greater than or equal to 1.02, optionally 1.2-3.0.

10. The separator according to any one of claims 1-9, wherein
the thickness of the first base film is 2µm-12µm, optionally 3µm-6µm; and/or
the thickness of the second base film is 2µm-12µm, optionally 3µm-5µm.

11. The separator according to any one of claims 1-10, wherein
the ratio of the melting point of the first base film to the melting point of the second base film is greater than or equal to 1.05 and less than or equal to 3.0, optionally greater than or equal to 1.1 and less than or equal to 2.5.

12. The separator according to any one of claims 1-11, wherein
the melting point of the first base film is160°C-360°C, optionally 180°C-350°C; and/or
the melting point of the second base film is120°C-280°C, optionally 130°C-265°C.

13. The separator according to any one of claims 1-12, wherein
each of the first base film and the second base film is independently at least one selected from the group consisting of polyolefins and derivatives thereof, halogenated polyolefins and derivatives thereof, polyethers and derivatives thereof, polyetheretherketones and derivatives thereof, polyesters and derivatives thereof, polyimides and derivatives thereof, polyvinyl alcohol and derivatives thereof, polytetrafluoroethylene and derivatives thereof, polyvinyl fluoride and derivatives thereof, polyvinylidene fluoride and derivatives thereof, and polyethylene terephthalate and derivatives thereof.

14. The separator according to any one of claims 1-13, wherein the separator further comprises:
a bonding layer provided between the first base film and the second base film, wherein the bonding layer comprises a binder;
optionally, the bonding layer comprises a binder and a filler.

15. The separator according to claim 14, wherein
the binder comprises one or more of polyacrylate, polyacrylic acid, polytetrafluoroethylene, polyvinylidene fluoride, vinylidene fluoride-trichloroethylene copolymer, polyvinyl pyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl pullulan.

16. The separator according to claim 14 or 15, wherein
the filler comprises at least one of inorganic particles, organic particles, and organic-metal framework materials.

17. The separator according to any one of claims 14-16, wherein
the thickness of the bonding layer is greater than or equal to 0.3 µm, optionally 0.5-2 µm.

18. The separator according to any one of claims 1-17, wherein
the air permeability of the separator is 200s/100cc-400s/100cc, optionally 250s/100cc-320s/100cc; and/or
the porosity of the separator is 25%-80%, optionally 35%-55%.

19. A method for preparing a separator, comprising:
providing a first base film and a second base film, wherein the melting point of the second base film is lower than the melting point of the first base film, the porosity of the first base film is denoted as P1, the porosity of the second base film is denoted as P2, and 1.02≤P1/P2≤3; and
compounding the first base film and the second base film to obtain the separator.

20. The method for preparing a separator according to claim 19, wherein the method further comprises:
providing a bonding layer slurry, wherein the bonding layer slurry comprises a binder; and
applying the bonding layer slurry on the first base film and/or the second base film to form a bonding layer, wherein the bonding layer is located between the first base film and the second base film after compounding;
optionally, the bonding layer slurry further comprises a filler; optionally, the filler comprises at least one of inorganic particles, organic particles, and organic-metal framework materials.

21. A secondary battery, comprising the separator according to any one of claims 1-20, or the separator prepared by the method according to claim 19 or 20.

22. The secondary battery according to claim 21, wherein the secondary battery further comprises a positive electrode plate and a negative electrode plate, and the second base film faces the negative electrode plate.

23. An electrical apparatus, comprising the secondary battery according to claim 21 or 22.
